# EUROPÄISCHE PATENTSCHRIFT

(11) **EP 0 630 842 B1**
(45) Veröffentlichungstag und Bekanntmachung des Hinweises auf die Patenterteilung: **09.10.1996**
(21) Anmeldenummer: 94107294.4
(22) Anmeldetag: 10.05.1994
(51) Int. Cl.: B65G 69/28

(54) **Überladebrücke für Rampen**
Loading bridge for ramps
Pont de chargement pour rampes

(30) Priorität: 21.05.1993 DE 4316956
(43) Veröffentlichungstag der Anmeldung: 28.12.1994
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 3 412 065
- DE-U- 9 303 088
- US-A- 3 728 753

## Beschreibung

Die Erfindung betrifft eine Überladebrücke für Rampen mit einer an ihrem rampenseitigen Ende um eine waagerechte Achse verschwenkbar gelagerten Brückenplatte und einer am freien Ende der Brückenplatte befindlichen aus- und einfahrbaren bzw. aus- und einklappbaren Verlängerung zur Auflage und Abstützung auf der zu be- bzw. entladenden Plattform, wobei die Brückenplatte an beiden seilichen Rändern mit senkrechten Schutzblechen zum Überbrücken des Spaltes zwischen der nach oben geschwenkten Brückenplatte und der Rampenoberfläche und die Brückenplatte mit im Bereich ihrer seitlichen Ränder angeordneten, sich in der Ruhelage auf einem festen Widerlager in einer Rampenausnehmung abstützenden, um eine waagerechte Achse pendelnd verschwenkbaren Stützen versehen sind (siehe zum Beispiel die DE-U-9 303 088).

Bei den bekannten Überladebrücken dieser Art ist die Halterung zur Lagerung der Stützen an der Unterseite der eigentlichen Brückenplatte angeordnet; den beiden Stützen ist dabei eine quer zur Brückenplatte verlaufende, unten in der Rampenausnehmung befindliche kräftige Traverse zugeordnet, um die Stützlast abfangen zu können, wenn sich die Brückenplatte in der Ruhestellung befindet und dabei mit einer erheblichen Verkehrslast durch den Rampenbetrieb gerechnet werden muss.

Der Erfindung geht von der Erkenntnis aus, dass die Belastung des Widerlagers zum Unterfangen der Stützen dann am geringsten ist, wenn sich die Widerlager sehr nahe am Rand der unterhalb der Brückenplatte befindlichen Rampenausnehmung befinden. Hiervon ausgehend liegt der Erfindung die Aufgabe zugrunde, die oben erwähnten Überladebrücken so auszubilden, dass auf eine kräftige, biegesteife Traverse für die beiden Stützen verzichtet und demgemäss eine vereinfachte Ausbildung des Widerlagers für die beiden Stützen verwendet werden kann.

Zur Lösung dieser Aufgabe sind erfindungsgemäss die Halterungen für die Stützenaufhängung mit den Schutzblechen verbunden und zudem sind die Stützen nahe an den Schutzblechen angeordnet, wobei als Widerlager für die Stützen an den Seitenwänden der Rampenausnehmung befestigte Konsolen vorgesehen sein können. Die Widerlager können aber auch an nach unten in die Rampe hineinreichenden Blechen od. dgl. befestigt sein, die durch quer zur Brücke verlaufende, vorwiegend auf Zug beanspruchte Elemente z.B. ein Seil oder Rohr in der Weise verbunden sind, dass die Widerlager unter der Stützlast nicht zur Seite hin ausweichen können.

Dabei kann der Abstand der Stützen von den Schutzblechen so gering gehalten werden, dass die Stützen mit einem für ihre Schwenkbewegung gerade ausreichenden Spiel in Bezug auf die Innenfläche angeordnet sind. Damit können Konsolen benutzt werden, die nur geringfügig gegenüber den Seitenwänden der Rampenausnehmung vorspringen. In diesem Falle ist der Abstand der Stützen von der Innenfläche der Schutzbleche wesentlich kleiner als die Breite der Stützen. Der geringe Abstand der Stützen von den Schutzblechen hat auch den Vorteil, dass diese auch als Führungsmittel dienen können, wenn die Schwenkbewegung der Stützen erfolgt, was im Regelfalle durch eine Bewegung der Verlängerung vollzogen wird.

Weitere Einzelheiten der Erfindung weden anhand der Zeichnung erläutert, in der ein Ausführungsbeispiel der Erfindung dargestellt ist. Es zeigen :
Fig. 1 einen senkrechten Teillängschnitt durch eine Überladebrücke für Rampen mit in der Ruhestellung befindlicher Brückenplatte und ebenfalls in Ruhestellung befindlicher Verlängerung,
Fig. 2 einen Schnitt gemäs Fig. 1, jedoch mit teilweise ausgefahrener Verlängerung,
Fig. 3 einen Schnitt nach der Linie III - III von Fig. 1 und
Fig. 4 einen Schnitt nach der Lnie IV IV von Fig. 1.

Eine Brückenplatte 1 ist ist an ihrem brückenseitigen, hinteren Ende um eine eine waagerechte, quer verlaufende Achse 2 an der Rampe 3 gelagert, die eine Ausnehmung 4 zur Aufnahme der Brückenplatte 1 aufweist, eine Rampenkante 5 und eine Oberfläche 3' aufweist. Am vorderen Ende der Brückenplatte 1 ist eine in Brückenlängsrichtung bewegbare, ein- und ausfahrbare, mit einem Auflageteil 6 ausgestattete Verlängerung 7 gelagert. Sie kann durch einen nicht dargestellten Schlitten getragen und kann durch nicht näher dargestellte Arbeitszylinder bewegt werden. Die Verlängerung 7 dient zur Auflage auf einer zu be- bzw. entladenden Plattform, auf der sich die Brückenplatte 1 über die Verlängerung 7 abstützt. Der zum Verschwenken der Brückenplatte 1 dienende Hubzylinder ist nicht dargestellt.

Zu beiden Seiten ist die Brückenplatte 1 mit senkrechten Schutzblechen 10 versehen, die nahe an den Seitenflächen 9 der Ausnehmung 4 angeordnet ist und bei hochgeschwenkter Brückenplatte 1 den Spalt zwischen dieser Platte und der darunter liegenden Rampenkante 11 aus Sicherheitsgründen überbrücken soll.

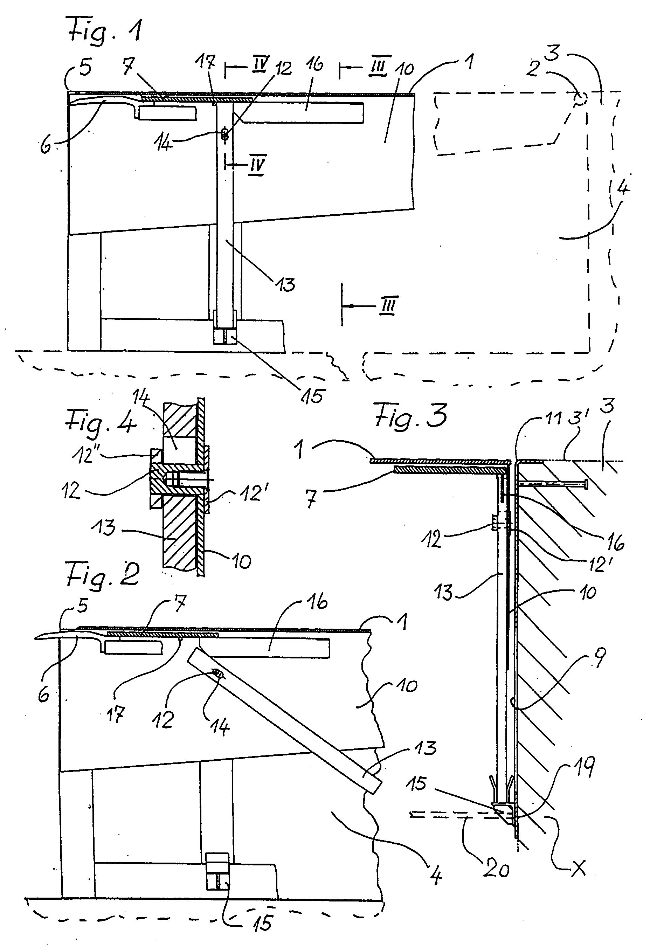

Die beiden Schutzbleche 1o weisen eine als Stange 12 ausgeführte Lagerstelle auf, die eine Bohrung in den Schutzblechen 1o durchsetzt und durch aussen aufgesetzte Teller 12' gegen Verschieben und Verlagerungen gesichert ist. Die Stange 12 mit einem innen liegenden Bund 12'' bildet eine waagerechte Schwenkachse für schlanke, pendelnd aufgehängte Stützen 13, die ein von der Stange 12 durchsetztes Langloch 14 aufweist. In der Stützstellung ( Wirkstellung ) der Stütze 13 nimmt sie gemäss Fig. 1 eine senkrechte Stellung ein, sie stützt sich unten auf ein als Konsole 15 ausgeführtes Widerlager ab, damit die Brückenplatte 1 in ihrer Ruhestellung die Rampenverkehrslast aufnehmen kann. Dabei befindet sich auf jeder Seite der Brückenplatte 1 eine Stütze 13.

Das Langloch 14 ist so angeordnet, dass die Stütze 13 bei angehobener Brückenplatte 1 aufgrund der Stange 12 frei pendeln kann; in der Stützstellung ist die Stange 12 jedoch entlastet, weil sich dann die Brückenplatte 1 auf der oberen Stirnfläche der Stütze 13 abstützen kann. Damit die Stütze 13 nicht hinderlich ist, wird sie beim Ausfahren der Verlängerung 7 von dem Mitnehmer 16 erfasst, um sie gemäss Fig. 2 nach hinten zu verschwenken. Wird die Verlängerung 7 eingefahren, so schwenkt die Stütze 13 zurück in die senkrechte Stellung. Bei 17 ist noch ein Anschlag für die Stütze 13 vorgesehen, der ein ungewolltes Verschwenken der Stütze 13 bei in der Ruhestellung befindlicher Brückenplatte 1 verhindern soll.

Besonders wichtig ist, dass die Stütze 13 so nahe innen an den Schutzblechen 1o anliegt, dass gerade ein zum Pendeln ausreichend grosses Spiel zwischen den Stützen 13 und den Schutzblechen 1o bzw. dem Bund 12'' gegeben ist. Somit befinden sich die Stützen 13 am äussersten Rand unterhalb der Brückenplatte 1, um so eine vergleichsweise kurze Konsole 15 zum Unterfangen der Stützen 13 benutzen zu können.

Aufgrund der Erfindung ergibt sich der Vorteil, dass Querverstrebungen zum Abstützen der Stützen 13 unterhalb der Brückenplatte 1 in Fortfall kommen können; der so gewonnene Raum unterhalb der Brückenplatte kann nunmehr für andere Einrichtungen der Brücke benutzt werden. Erwähnt sei, das die Stange 12 bzw. ihr Teller 12' auch fest durch Schweissen od. dgl. mit den Schutzblechen 1o verbunden sein kann. Auch kann das innen liegende Ende der Stange 12 z.B. über einen Bügel wiederum mit dem Schutzblech 10 in Verbindung stehen, also für sich noch einmal abgestützt sein.

Es sei noch erwähnt, dass die Befestigung der Konsolen 15 z.B. bei Hohlräumen unterhalb der Rampenfläche nicht unbedingt an der Rampe 3 selbst erfolgen muss, vielmehr können auch die Konsolen 15 an einem an der Rampe befestigten Gestell befestigt sein, das mit der Brückenmontage in die Ausnehmung 4 eingesetzt wird. Sollte unter diesen Voraussetzungen ( z.B. beim Vorhandensein von Hohlräumen in der Rampe bei x ) ein zur Anbringung der Konsolen 15 dienendes Element - meist ein Blech 19 - ausserstande sein, die Befestigung der Konsolen 15 sicherzustellen, so können die Elemente bzw. Konsolen 15 über ein vorwiegend auf Zug beanspruchtes Glied 2o z.B. ein Seil oder ein dünnes Rohr verbunden werden, um so ein seitliches Ausweichen des Bleches 19 auszuschliessen.

## Patentansprüche

1. Überladebrücke für Rampen (3) mit einer an ihrem rampenseitigen Ende um eine waagerechte Achse (2) verschwenkbar gelagerten Brückenplatte (1) und einer am freien Ende der Brückenplatte (1) befindlichen aus- und einfahrbaren bzw. aus- und einklappbaren Verlängerung (7) zur Auflage und Abstützung auf der zu be- bzw. entladenden Plattform, wobei die Brückenplatte (1) an beiden seitlichen Rändern mit senkrechten Schutzblechen (10) zum Überbrücken des Spaltes zwischen der nach oben geschwenkten Brückenplatte (1) und der Rampenoberfläche und die Brückenplatte (1) mit im Bereich ihrer seitlichen Ränder angeordneten, sich in der Ruhelage der Brückenplatte (1) auf einem festen Widerlager (15) in einer Rampenausnehmung abstützenden, um eine waagerechte Achse pendelnd verschwenkbaren Stützen (13) versehen sind, dadurch gekennzeichnet, dass die Halterungen für die Stützenaufhängung (12) mit den Schutzblechen (1o) verbunden und die Stützen (13) nahe an den Schutzblechen (1o) angeordnet sind.

2. Brücke nach Anspruch 1, dadurch gekennzeichnet, dass der Abstand der Stützen (13) von den Schutzblechen (1o) wesentlich kleiner ist als die Breite der Stützen (13).

3. Brücke nach Anspruch 1, dadurch gekennzeichnet, dass die Stützen (13) so nahe an den Schutzblechen (1o) angeordnet sind, dass ein zum freien Verschwenken der Stützen (13) ausreichendes Spiel zwischen den Stützen und dem zugehörigen Schutzblech (1o) gerade noch gegeben ist.

4. Brücke nach Anspruch 1, dadurch gekennzeichnet, dass als Schwenkachse für die Stützen (13) eine Stange (12) dient, die fest mit dem Schutzblech (1o) verbunden ist und dieses vorzugsweise durchsetzt.

5. Brücke nach Anspruch 1 und 4, dadurch gekennzeichnet, dass die Stützen (13) mit ihrer Aussenseite an den Schutzblechen (1o) anliegen oder mit geringem Spiel im Abstand davon angeordnet und innen an der Stange (12) gegen axiales Verschieben gesichert sind.

6. Brücke nach Anspruch 1, dadurch gekennzeichnet, dass die Widerlager für die Stützen (13) von Konsolen (15) gebildet sind, die an den Seitenwänden (9) der Rampenausnehmung (4) befestigt sind.

7. Brücke nach Anspruch 1, dadurch gekennzeichnet, dass als Widerlager für die Stützen (13) Konsolen (15) dienen, die über ein vorwiegend auf Zug beanspruchtes Element (20) z.B. in Form eines Seiles oder Rohres untereinander verbunden sind.

8. Brücke nach Anspruch 7, dadurch gekennzeichnet, dass die Konsolen (15) an einem senkrechten Blech (19) aufgehängt sind, das sich praktisch unterhalb einer Rampenkante (11) befindet.

## Claims

1. Transfer bridge for platforms (3), having a bridge plate (1) which is pivotably mounted at its platform end about a horizontal axis (2), and an extendable and retractable or outwardly and inwardly pivotable extension member (7), which is situated at the free end of the bridge plate (1), for deposit and support on the deck to be loaded or unloaded, the bridge plate (1) being provided on both lateral edges with vertical protective plates (10) to bridge the gap between the upwardly pivoted bridge plate (1) and the platform surface, and the bridge plate (1) being provided with supports (13), which are disposed in the region of its lateral edges, are supported in the inoperative position of the bridge plate (1) on a fixed abutment (15) in a platform recess and are oscillatingly pivotable about a horizontal axis, characterised in that the holders for the support mounting (12) are connected to the protective places (10), and the supports (13) are disposed close to the protective plates (10).

2. Bridge according to claim 1, characterised in that the spacing between the supports (13) and the protective plates (10) is substantially smaller than the width of the supports (13).

3. Bridge according to claim 1, characterised in that the supports (13) are disposed so close to the protective plates (10) that there is still some clearance between the supports and the associated protective plate (10), which clearance is sufficient for the free pivoting movement of the supports (13).

4. Bridge according to claim 1, characterised in that a rod (12), which is securely connected to the protective plate (10) and preferably traverses therethrough, serves as the pivotal axis for the supports (13).

5. Bridge according to claims 1 and 4, characterised in that the supports (13) abut with their external surface against the protective plates (10) or are spaced with minimal clearance therefrom and prevented from being axially displaced internally on the rod (12).

6. Bridge according to claim 1, characterised in that the abutments for the supports (13) are formed by brackets (15), which are mounted on the lateral walls (9) of the platform recess (4).

7. Bridge according to claim 1, characterised in that brackets (15), which are interconnected via a predominantly tensioned element (20), e.g. in the form of a cable or pipe, serve as the abutments for the supports (13).

8. Bridge according to claim 7, characterised in that the brackets (15) are suspended from a vertical plate (19), which is situated practically beneath a platform edge (11).

## Revendications

1. Niveleur de quai (3), comportant, à son extrémité côté quai, un tablier (1) basculant par rapport à un axe (2) horizontal et un prolongement (7) se trouvant à l'extrémité libre du tablier (1), pouvant être rentré et sorti ou rabattu et déployé, destiné à s'appliquer à la plate-forme à charger ou à décharger et à y prendre appui, le tablier (1) étant muni sur les deux bords latéraux de tôles (10) protectrices verticales, servant à combler l'intervalle compris entre le tablier (1) basculé vers le haut et la surface du quai, et le tablier (1) étant muni d'appuis (13), montés dans la région de ses bords latéraux, s'appuyant, en la position de repos du tablier (1), sur une butée (15) fixe prévue dans un évidement du quai et basculant de manière oscillante par rapport à un axe horizontal, caractérisé en ce que les fixations destinées à la suspension (12) des appuis sont reliées aux tôles (10) protectrices et en ce que les appuis (13) sont montés à proximité des tôles (10) protectrices.

2. Niveleur de quai suivant la revendication 1, caractérisé en ce que la distance des appuis (13) aux tôles (10) protectrices est sensiblement plus petite que la largeur des appuis (13).

3. Niveleur de quai suivant la revendication 1, caractérisé en ce que les appuis (13) sont montés si près des tôles (10) protectrices qu'un jeu suffisant au basculement libre des appuis (13) est juste encore préservé entre les appuis et la tôle (10) associée.

4. Niveleur de quai suivant la revendication 1, caractérisé en ce qu'une barre (12), qui est reliée solidement à la tôle (10) protectrice et qui de préférence la traverse, sert d'axe de basculement aux appuis (13).

5. Niveleur de quai suivant la revendication 1 ou 4, caractérisé en ce que les appuis (13) s'appliquent par leur face extérieure aux tôles (10) protectrices ou en sont montés à distance en ayant un petit jeu et sont bloqués à l'intérieur sur la barre (12) à l'encontre d'un coulissement axial.

6. Niveleur de quai suivant la revendication 1, caractérisé en ce que les butées destinées aux appuis (13) sont formées par des consoles (15) qui sont fixées aux parois (9) latérales de l'évidement (4) du quai.

7. Niveleur de quai suivant la revendication 1, caractérisé en ce que des consoles (15), qui sont reliées entre elles par l'intermédiaires d'un élément (20) sollicité principalement en traction, par exemple sous forme d'un câble ou d'un tuyau, servent de butées aux appuis (13).

8. Niveleur de quai suivant la revendication 7, caractérisé en ce que les consoles (15) sont suspendues à une tôle (19) verticale qui se trouve pratiquement au-dessous d'un bord (11) du quai.
